# FASCICULE DE BREVET EUROPEEN

(11) **EP 0 426 588 B1**
(45) Date de publication et mention de la délivrance du brevet: **20.04.1994**
(21) Numéro de dépôt: 90440084.3
(22) Date de dépôt: 28.09.1990
(51) Int. Cl.: A01D 78/10, A01B 59/041

(54) **Perfectionnement aux machines agricoles destinées notamment à la fenaison**
Verbesserung für landwirtschaftliche Maschinen insbesondere für Heuwerbungsmaschinen
Improvement for agricultural machines especially for haymaking machines

(30) Priorité: 29.09.1989 FR 8912941
(43) Date de publication de la demande: 08.05.1991
(73) Titulaire: KUHN S.A., F-67700 Saverne (FR)
(72) Inventeur: Quirin, Michel, F-67310 Wasselonne (FR)
(74) Mandataire: Andres, Jean-Claude

(56) Documents cités:
- EP-A- 0 273 513
- EP-A- 0 330 818
- DE-A- 1 557 877
- DE-A- 1 933 931
- DE-U- 8 807 054
- DE-U- 8 807 614
- FR-A- 2 386 240
- FR-A- 2 450 037
- FR-A- 2 519 835
- GB-A- 2 023 399
- US-A- 3 391 663
- US-A- 3 731 750
- Prospectus KUHN-920 1001-12/86 Girofaneur GF 5000 HN

## Description

La présente invention s'adresse à une machine agricole destinée notamment à la fenaison, possédant un châssis portant plusieurs rotors destinés à déplacer des produits sur le sol, ledit châssis étant réalisé en une partie centrale et des parties latérales articulées aux extrémités de la partie centrale par l'intermédiaire de pivots autour desquels elles sont déplaçables en hauteur au moyen de vérins hydrauliques pour le transport, ladite partie centrale comportant une poutre de liaison qui est articulée au moyen d'un axe sensiblement vertical sur un chevalet d'attelage à trois points d'accouplement, lequel chevalet d'attelage est muni d'un dispositif d'arrêt pour immobiliser automatiquement la poutre de liaison et le châssis par rapport au chevalet lorsque toute la machine est soulevée, un verrou étant en sus prévu pour bloquer le dispositif d'arrêt dans la position où il immobilise la poutre de liaison au transport.

Une machine de ce genre est connue dans le prospectus KUHN - 920 1001-12/86 relatif au Girofaneur GF 5000 HN. Pour amener cette machine de la position de travail dans la position de transport et inversement, de la position de transport dans la position de travail, l'utilisateur commande les déplacements en hauteur des parties latérales du châssis à partir du tracteur. Il doit cependant quitter le tracteur lors de chaque changement de position pour déplacer manuellement le verrou de blocage du dispositif d'arrêt. Cette opération est donc relativement ennuyeuse à effectuer.

Il arrive aussi que des personnes omettent de bloquer le dispositif d'arrêt lorsqu'elles déplacent ces machines. Cela est très dangereux du fait qu'en passant sur une dénivellation la poutre de liaison peut se libérer et pivoter latéralement avec tout le châssis. Dans ce cas, le châssis peut à la fois subir et causer d'importants dommages s'il rencontre par exemple un obstacle, un véhicule ou une personne se trouvant dans la zone de pivotement.

La présente invention a notamment pour but de réduire le travail de l'utilisateur lors de chaque changement de position de la machine et d'améliorer la sécurité au transport.

A cet effet, une importante caractéristique de l'invention consiste en ce qu'au verrou qui bloque le dispositif d'arrêt sont reliés des moyens de manoeuvre s'étendant jusqu'au voisinage d'une partie latérale du châssis et qui sont agencés de manière à être actionnés par cette partie latérale ou le vérin hydraulique correspondant lorsque ladite partie latérale est déplacée vers le haut dans la position de transport.

Lesdits moyens de manoeuvre provoquent ainsi automatiquement le blocage du dispositif d'arret lorsque l'utilisateur fait se lever les parties latérales du châssis pour passer de la position de travail dans la position de transport. De ce fait, l'intervention manuelle de l'utilisateur est supprimée. Ceci facilite son travail et élimine le risque que ce blocage ne soit pas effectué à la suite d'un oubli.

Selon une caractéristique de l'invention ces moyens de manoeuvre comprennent un pivot qui est articulé sur un axe sensiblement vertical et une tringle reliant ledit pivot au verrou de blocage. Le pivot comporte deux bras dont l'un est relié à la tringle et l'autre s'étend jusque dans la zone de déplacement d'une partie latérale du châssis ou du vérin hydraulique correspondant. Le bras du pivot qui est relié à la tringle comporte un trou oblong dans lequel est guidée l'extrémité de cette tringle. En sus, il est prévu un premier ressort dont l'action tend à amener le verrou dans la position où il bloque le dispositif d'arrêt et un second ressort, de force supérieure au premier, qui tire sur le pivot et dont l'action tend à retirer le verrou de la position de blocage.

Ainsi, lorsque l'opérateur déplace les parties latérales du châssis vers le haut, l'une d'elles ou le vérin hydraulique correspondant rencontre le pivot et le fait pivoter autour de son axe d'articulation. Ce faisant, il libère la tringle de sorte que le premier ressort puisse tirer le verrou dans la position de blocage. Inversement, lorsque l'opérateur descend la partie latérale du châssis, le second ressort ramène le pivot dans sa position initiale. Ce dernier entraine alors la tringle qui tire sur le verrou de sorte qu'il libère le dispositif d'arrêt.

Selon une autre caractéristique de l'invention, les moyens de manoeuvre sont constitués par un pivot qui est articulé sur un axe sensiblement vertical, une tringle reliant le pivot au verrou et un poussoir qui est articulé sur ledit pivot. Ce pivot présente deux bras disposés en forme d'équerre. l'un de ces bras comporte un trou oblong dans lequel est guidée l'extrémité de la tringle et l'autre un trou cylindrique dans lequel est engagée une broche d'articulation du poussoir. Ce poussoir est constitué par une tige qui est guidée en translation dans des supports fixes. Son extrémité opposée à celle qui est reliée au pivot s'étend jusque dans la zone de déplacement d'une partie latérale du châssis ou du vérin hydraulique correspondant.

Il est en sus prévu un premier ressort dont l'action tend à amener le verrou dans la position où il bloque le dispositif d'arrêt. Un deuxième ressort, de force supérieure au premier, est disposé sur le poussoir. Ce deuxième ressort tend à déplacer le poussoir vers la partie latérale ou le vérin hydraulique qui le commande.

Dans ce cas, lorsque l'opérateur déplace la partie latérale du châssis vers le haut, celle-ci ou le vérin hydraulique correspondant déplace le poussoir en direction du pivot. Celui-ci tourne alors autour de son axe d'articulation et libère la tringle et le verrou. Le premier ressort déplace alors ledit verrou dans la position de blocage. Inversement, lorsque l'opérateur redescend la partie latérale du châssis, le poussoir se déplace sous la pression du deuxième ressort. Il tire alors sur le verrou, par l'intermédiaire du pivot et de la tringle, de manière à l'amener dans la position débloquée.

D'autres caractéristiques et avantages de l'invention ressortiront des revendications et de la description ci-après de différents exemples de réalisation non limitatifs de l'invention, avec référence aux dessins annexés dans lesquels :
- La figure 1 représente un premier exemple de réalisation d'une machine selon l'invention dans la position de travail,
- La figure 2 représente la machine de la figure 1 en position de transport,
- La figure 3 représente, à plus grande échelle, une vue de détail des moyens de manoeuvre du verrou,
- La figure 4 représente, à plus grande échelle, une vue de détail du dispositif d'arret en position de travail,
- La figure 5 représente une vue de détail du dispositif d'arret en position de transport,
- La figure 6 représente une vue analogue à celle de la figure 3, d'un autre exemple de réalisation des moyens de manoeuvre du verrou.

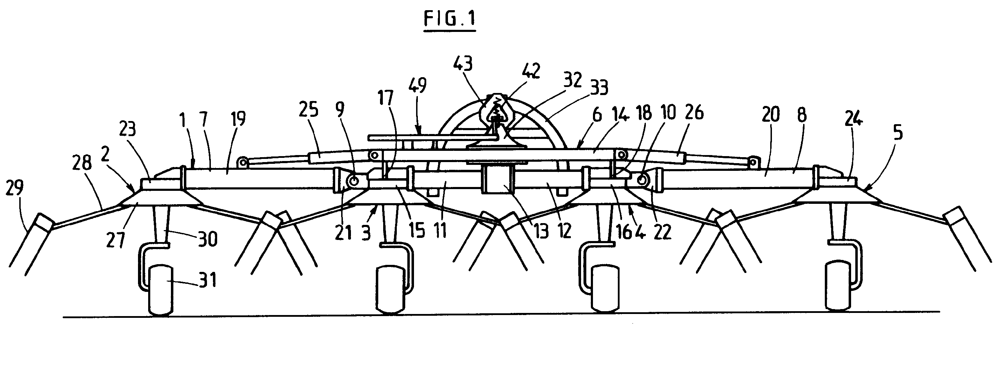

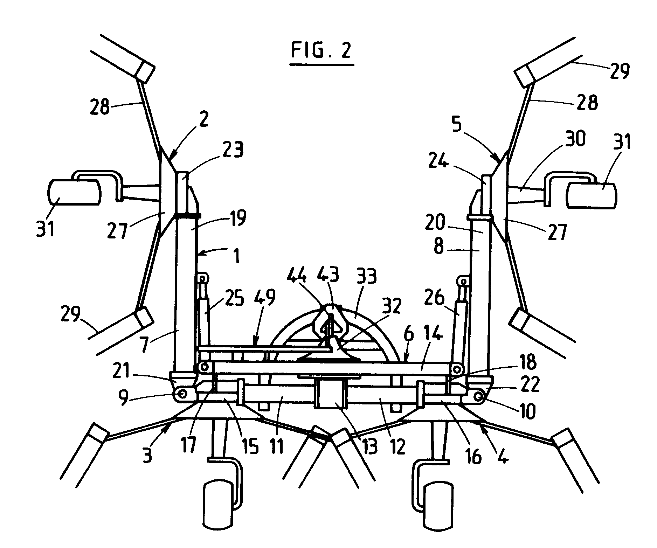

Telle qu'elle est représentée sur les figures 1 et 2, la machine selon l'invention comporte un châssis (1) de forme allongée portant plusieurs rotors (2 à 5) destinés à déplacer des produits sur le sol. Ce châssis (1) est réalisé en une partie centrale (6) et deux parties latérales (7 et 8). Ces dernières sont articulées aux extrémités de ladite partie centrale par l'intermédiaire de pivots (9 et 10) sensiblement horizontaux et dirigés dans la direction d'avancement. La partie centrale (6) est composée de deux tubes (11 et 12) reliés à un carter central (13) et d'une traverse (14) qui se situe au-dessus de ces tubes. Chacun de ces tubes (11, 12) porte à son extrémité opposée au carter central (13) un boîtier (15 et 16). Les rotors (3 et 4) se situent sous ces boîtiers (15 et 16). La traverse (14) est reliée à ces boîtiers (15 et 16) par des montants (17 et 18).

Chaque partie latérale (7, 8) du châssis (1) est formée par un tube (19, 20). Chaque tube (19, 20) comporte à l'une de ses extrémités une chape (21, 22) à travers laquelle il est articulé sur le pivot (9 ou 10) et, à son autre extrémité un boîtier (23, 24). Les rotors (2 et 5) se situent sous ces boîtiers (23 et 24). A chaque partie latérale (7, 8) est associé un vérin hydraulique (25, 26) servant à la déplacer autour du pivot (9, 10) correspondant. Le vérin (25) est articulé sur la traverse (14) de la partie centrale (6) et le tube (19) de la partie latérale (7) du châssis (1), tandis que le vérin (26) est articulé sur la même traverse (14) et le tube (20) de la partie latérale (8).

Les quatre rotors (2 à 5) sont sensiblement identiques. Chacun comprend un moyeu (27) sur lequel sont fixés plusieurs bras (28) qui s'étendent radialement. Ces bras (28) portent à leurs extrémités les plus éloignées du moyeu (27) des fourches de travail (29). Le moyeu (27) de chaque rotor est monté de manière à pouvoir tourner sur un axe support fixe (30) sensiblement vertical ou incliné dans la direction d'avancement de la machine. Chaque support (30) est relié à un des boîtiers (15, 16, 23 et 24) et porte à son extrémité qui est dirigée vers le bas une roue (31) pouvant rouler sur le sol durant le travail.

Dans les différents tubes (11, 12, 19 et 20) sont logés des arbres d'entraînement pour les rotors (2 à 5). Ces arbres sont articulés entre eux au niveau des pivots (9 et 10). Dans chaque boîtier (15, 16, 23 et 24) ils comportent un pignon qui engrène avec une couronne dentée qui est solidaire du moyeu (27) du rotor (2 à 5) correspondant. En sus, l'arbre d'entrainement qui est logé dans les tubes (11 et 12) traverse le carter (13) et porte à l'intérieur de celui-ci un pignon d'entraînement. Ce pignon engrène avec un second pignon qui est solidaire d'un arbre d'entrée qui s'étend hors du carter sur le côté avant par rapport à la direction d'avancement et qui peut être relié à l'arbre de prise de force du tracteur utilisé pour déplacer et animer la machine.

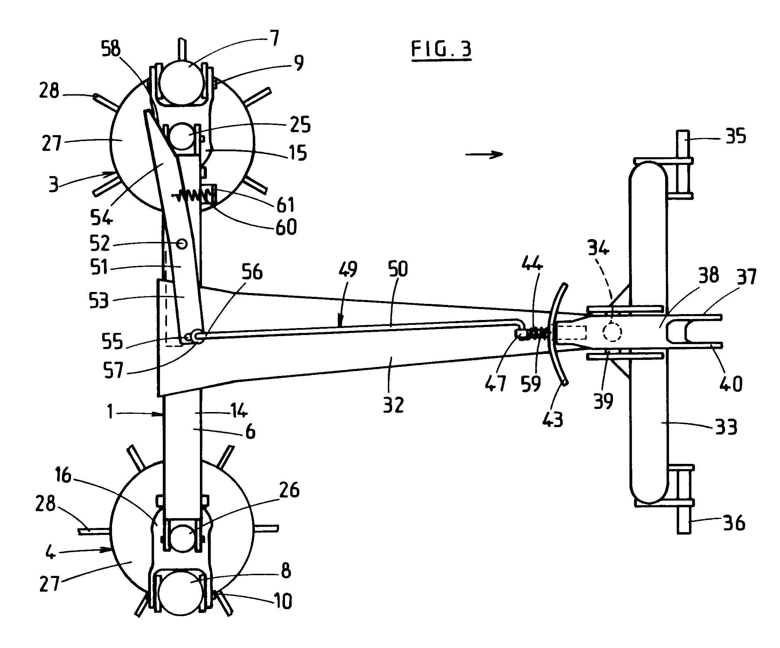

Sur la traverse (14) de la partie centrale (6) du châssis (1) est fixée une poutre de liaison (32) qui est dirigée dans la direction d'avancement. A son extrémité la plus éloignée du châssis (1) est articulé un chevalet d'attelage (33). l'articulation entre la poutre (32) et ce chevalet (33) est assurée au moyen d'un axe sensiblement vertical (34) (voir figures 3 à 5). Ledit chevalet (33) comporte trois points d'accouplement (35, 36 et 37) pour l'accrochage au tracteur. Le point d'accouplement supérieur (37) est constitué par une bascule (38) articulée sur le chevalet (33) au moyen d'un axe sensiblement horizontal (39). Sur le côté qui est dirigé vers l'avant par rapport au sens d'avancement, cette bascule (38) comporte une chape d'accouplement (40). Sur le côté qui est dirigé vers l'arrière, elle comporte un arrêt (41) à tête cylindrique. La tête de cet arrêt (41) pénètre dans une ouverture (42) de forme triangulaire prévue dans une plaque cintrée (43) solidaire de la poutre de liaison (32). Cette ouverture (42) comporte une base sensiblement horizontale et deux côtés inclinés qui se rejoignent en un point constituant le sommet et qui se situe sensiblement à égale distance des deux extrémités de la base. Cette base et les deux côtés précités limitent le pivotement de la poutre de liaison (32) autour de l'axe d'articulation (34) avec le chevalet (33). De plus, lorsque l'arrêt (41) se situe dans le sommet de l'ouverture (42) il immobilise totalement la poutre de liaison (32).

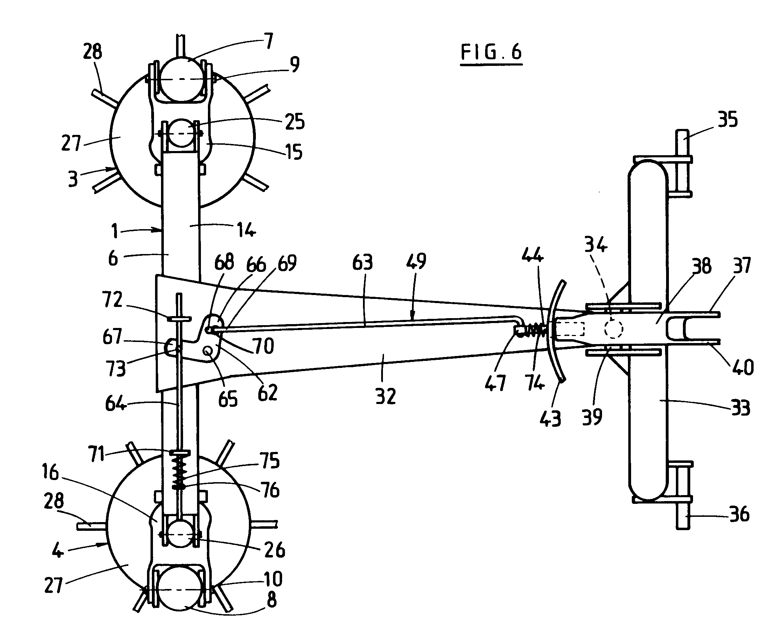

Sur cette poutre de liaison (32) est également articulé un verrou (44). Celui-ci se situe immédiatement derrière la plaque cintrée (43). L'articulation de ce verrou (44) est réalisée au moyen d'un axe (45) sensiblement horizontal, qui est guidé dans deux pattes solidaires de la poutre. Ledit axe (45) permet de déplacer le verrou (44) dans un plan vertical. Ce verrou (44) présente un nez (46) et une patte (47) servant à l'actionner. Ledit nez peut être amené, par pivotement de tout le verrou (44) autour de l'axe d'articulation (45), dans l'ouverture (42) de la plaque (43). Il occupe alors la position représentée sur la figure 5. Dans cette position, le nez (46) est placé sous l'arrêt (41) et le maintient bloque dans le sommet de l'ouverture (42). Le nez (46) comporte sur chacun de ses côtés une plaquette (48) qui s'étend latéralement. Ensemble, ces plaquettes (48) couvrent pratiquement la largeur de l'ouverture triangulaire (42). Ces plaquettes (48) empêchent le nez (46) de pénétrer dans l'ouverture (42) si l'arrêt (41) ne se situe pas dans le sommet de ladite ouverture.

A la patte (47) du verrou (44) sont reliés des moyens de manoeuvre (49) qui déplacent le verrou (44) autour de l'axe d'articulation (45) en vue du blocage et du déblocage de l'arrêt (41). Ces moyens (49) s'étendent jusqu'au voisinage d'une partie latérale (7 ou 8) du châssis (1). Ils sont actionnés automatiquement par cette partie latérale (7 ou 8) ou le vérin hydraulique (25 ou 26) correspondant lorsque ladite partie latérale est déplacée vers le haut dans la position de transport.

Dans l'exemple de réalisation selon la figure 3, les moyens de manoeuvre (49) comprennent une tringle (50) dont l'une des extrémités est accrochée à la patte (47) du verrou (44) et l'autre extrémité est accrochée à un pivot (51) qui est articulé sur un axe sensiblement vertical (52) prévu sur la traverse (14). Ce pivot (51) comporte deux bras (53 et 54) qui s'étendent pratiquement de part et d'autre de l'axe (52). La tringle (50) est reliée au premier bras (53). Pour cela, celui-ci comporte un trou oblong (55) dans lequel passe l'extrémité arrière (56) de la tringle (50). Cette extrémité (56) est coudée vers le bas et comporte de chaque côté du bras (53) une rondelle de guidage (57). Le second bras (54) du pivot (51) s'étend jusque dans la zone de déplacement du vérin hydraulique (25). Il comporte une face inclinée (58) qui est en contact avec le corps du vérin hydraulique (25) lorsque ce dernier est déplacé vers le haut.

Un premier ressort de traction (59) est accroché à la patte d'actionnement (47) du verrou (44) et à la plaque cintrée (43). Ce premier ressort (59) tire constamment sur ladite patte (47) et tend ainsi à amener le verrou (44) dans la position où il bloque le dispositif d'arrêt (41). Un deuxième ressort de traction (60) est accroché au second bras (54) du pivot (51) et à un support coudé (61) qui est soudé sur la traverse (14). Ce deuxième ressort (60) tire sur le pivot (51) de telle sorte qu'il ait tendance à pivoter autour de son axe d'articulation (52) et à retirer, par l'intermédiaire de la tringle (50), le verrou (44) de la position où il bloque le dispositif d'arrêt (41). La force de ce deuxième ressort (60) est supérieure à celle du premier ressort (59). Ainsi, lorsque le bras (54) du pivot (51) n'est pas en contact avec le vérin hydraulique (25) ledit deuxième ressort (60) provoque automatiquement le déblocage du dispositif d'arrêt (41).

Dans le mode de réalisation selon la figure 6 les moyens de manoeuvre (49) du verrou (44) comprennent notamment un pivot (62), une tringle (63) reliant ledit pivot à la patte d'actionnement (47) du verrou (44) et un poussoir (64). Ce pivot (62) est articulé sur un axe sensiblement vertical (65) solidaire de la poutre de liaison (32). Il comporte deux bras (66 et 67) disposés en forme d,équerre. Le premier bras (66) est relié à la tringle (63) tandis que le second bras (67) est relié au poussoir (64). Pour la liaison avec la tringle (63) le premier bras (66) comporte un trou oblong (68) dans lequel passe l'extrémité arrière (69) de la tringle (63). Cette extrémité est coudée vers le bas et comporte de chaque côté du bras (66) une rondelle de guidage (70).

Le poussoir (64) est constitué par une tige qui est guidée en translation dans deux supports fixes (71 et 72) respectivement solidaires de la traverse (14) et de la poutre de liaison (32). Une des extrémités de ce poussoir (64) s'étend jusque dans la zone de déplacement du vérin hydraulique (26). Elle pourrait cependant aussi passer à côté dudit vérin et s'étendre jusque dans la zone de déplacement de la partie latérale (8) du châssis (1). L'autre extrémité de ce poussoir (64) est traversée par une broche (73) qui est en sus engagée dans un orifice cylindrique du second bras (67) du pivot (62). Cette broche (73) assure ainsi l'articulation entre le poussoir (64) et le pivot (62).

Un premier ressort de traction (74) est accroché à la patte d'actionnement (47) du verrou (44) et à la plaque (43). Ce ressort (74) tire sur ladite patte et tend à amener le nez (46) du verrou (44) dans la position où il bloque le dispositif d'arrêt (41). Sur le poussoir (64) est prévu un ressort de pression (75). Il est monté entre le support fixe (71) et une bague (76) qui est fixée sur le poussoir (64). l'action de ce ressort (75) tend à déplacer le poussoir (64) vers la partie latérale (8) du châssis (1) et à amener le verrou (44) dans la position débloquée, par l'intermédiaire du pivot (62) et de la tringle (63). Ce deuxième ressort (75) est réalisé de telle sorte que sa force soit supérieure à celle du premier ressort (74).

Durant le travail, la machine selon l'invention est accrochée au dispositif de relevage d'un tracteur. Elle occupe alors la position représentée sur la figure 1. Les quatre rotors (2 à 5) sont disposés suivant une ligne perpendiculaire au sens d'avancement. Les roues (31) se déplacent sur le sol en vue d'une bonne adaptation aux dénivellations. Les rotors (2 à 5) sont entraînés en rotation, à partir de l'arbre de prise de force du tracteur, de telle sorte qu'ils tournent deux à deux en convergence à l'avant. Les fourches (29) assurent alors le fanage des produits, tels que des végétaux, qui sont étalés sur le sol. La machine pourrait aussi être pourvue de rotors destinés à andainer les produits se trouvant au sol.

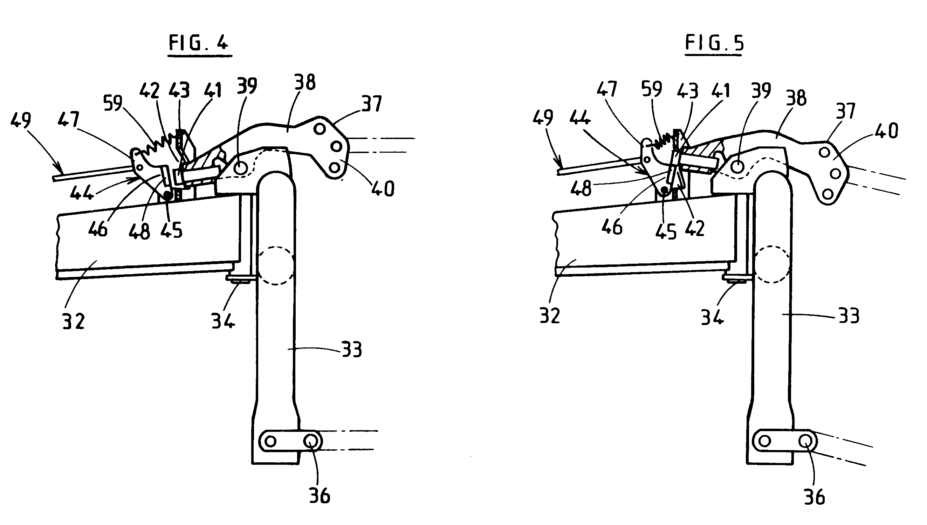

Dans cette position de travail, le verrou (44) occupe la position représentée sur la figure 4. Il se situe hors de l'ouverture (42) de la plaque cintrée (43). La poutre de liaison (32) peut alors pivoter ensemble avec le châssis (1) autour de l'axe d'articulation (34) avec le chevalet (33). Ce pivotement permet à la machine de mieux suivre le tracteur dans les parties courbes de la trajectoire suivie. Il est cependant limité au moyen des côtés de l'ouverture (42) de la plaque (43), qui butent contre l'arrét (41) dans les positions extrêmes. La longueur de la base de cette ouverture (42) détermine ainsi l'angle de pivotement. Dans l'exemple de réalisation suivant la figure 3, le pivot (51) occupe durant le travail la position représentée en traits interrompus. Il est tiré dans cette position par le ressort de traction (60). Il maintient le verrou (44) dans la position débloquée à travers la tringle (50), en raison de la force de traction du ressort (60) qui est supérieure à celle du ressort (59).

Pour le transport, la machine est soulevée à l'aide du dispositif de relevage du tracteur afin de dégager les roues (31) du sol. La machine est représentée en position de transport sur les figures 2, 3 et 5. Lors de ce soulèvement, la bascule (38) pivote autour de l'axe d'articulation (39) en raison de la traction exercée par la bielle d'accouplement du dispositif de relevage du tracteur. Durant ce pivotement de la bascule (38), l'arrêt (41) se déplace vers le haut dans le sommet de l'ouverture (42) de la plaque (43). Ce faisant, il ramène et immobilise automatiquement la poutre de liaison (32) et le châssis (1) dans l'alignement du tracteur.

Ensuite les deux parties latérales (7 et 8) du châssis (1) sont déplacées vers le haut autour des pivots (9 et 10) en vue de réduire la largeur de la machine (figure 2). Ce déplacement est effectué au moyen des vérins hydrauliques (25 et 26) qui sont commandés à partir du tracteur et qui se déplacent eux-mêmes vers le haut. Le corps du vérin (25) rencontre alors la face inclinée (58) du second bras (54) du pivot (51). La poussée exercée par ledit corps du vérin fait tourner le pivot (51) autour de son axe d'articulation (52), à l'encontre de la force du ressort (60). Le premier bras (53) se déplace alors vers l'avant et libère la tringle (50) et le verrou (44). Simultanément, le premier ressort (59) tire le verrou (44) autour de son axe d'articulation (45), de sorte que son nez (46) se place sous l'arrêt (41) et le bloque dans le sommet de l'ouverture (42) (voir figure 5).

Il peut arriver qu'un utilisateur de la machine procède au relevage des parties latérales (7 et 8) du châssis (1) avant d'avoir dégagé toute la machine du sol. Dans ce cas, l'arrét (41) se situe encore au niveau de la base de l'ouverture (42) et empêche la mise en place immédiate du verrou (44). La tringle (50) peut alors s'immobiliser par rapport au pivot (51) grâce au trou oblong (55). Ce dernier permet en effet au pivot (51) de tourner autour de son axe (52) sans que la tringle soit entraînée. Ensuite, aussitôt que la machine est soulevée, l'arrêt (41) se déplace dans le sommet de l'ouverture (42) et libère le passage par le verrou (44). Celui-ci est alors tiré par le ressort (59) dans l'ouverture (42) afin que le nez (46) assure le blocage dudit arrêt (41).

Pour faire revenir la machine dans la position de travail, les parties latérales (7 et 8) du châssis (1) sont déplacées vers le bas autour des pivots (9 et 10). Durant ce mouvement, le vérin hydraulique (25) libère le pivot (51). Celui-ci tourne alors autour de l'axe d'articulation (52), en raison de la traction du ressort (60). Son bras (53) tire alors la tringle (50) vers l'arrière, de telle sorte que celui-ci retire le nez (46) du verrou (44) de l'ouverture (42). De ce fait, le dispositif d'arrêt (41) est libéré et peut revenir dans la position qu'il occupe au travail dès que la machine est abaissée au niveau du sol.

Les opérations à effectuer pour la mise en position de transport de la machine équipée des moyens de manoeuvre (49) selon l'exemple de réalisation de la figure 6, sont identiques à celles décrites ci-dessus. Lorsque les parties latérales (7 et 8) du châssis (1) sont relevées autour de leurs pivots (9 et 10), le corps du vérin (26) rencontre l'extrémité du poussoir (64). Ledit corps déplace alors ce poussoir (64) en direction de la partie latérale opposée (7). En raison de ce déplacement, le ressort (75) est comprimé et le pivot (62) est tourné autour de son axe d'articulation (65). Le premier bras (66) de ce pivot (62) se déplace ainsi en direction du chevalet (33) et libère la tringle (63) et le verrou (44). Ce dernier est alors tiré par le premier ressort (74) autour de son axe d'articulation (45) afin que le nez (46) se place sous l'arret (41) et le bloque dans le sommet de l'ouverture (42).

Dans cet exemple, le trou oblong (68) permet également un déplacement du pivot (62) par rapport à la tringle (63) et au verrou (44) au cas où l'arrêt (41) empêcherait la mise en place immédiate dudit verrou.

Au retour dans la position de travail, le corps du vérin (26) libère le poussoir (64). Celui-ci se déplace alors vers la partie latérale (8) sous l'effet de la poussée du ressort (75). Ce faisant, il actionne le pivot (62) de telle sorte que son bras (66) se déplace autour de l'axe (65), vers le côté arrière de la machine. Ce bras (66) entraine alors la tringle (63) afin que celle-ci tire le verrou (44) hors de l'ouverture (42). L'arrêt (41) est ainsi libéré et peut reprendre la position qu'il occupe au travail.

Il est bien évident que l'invention n'est pas limitée aux modes de réalisation tels que décrits ci-dessus et représentés sur les dessins annexés. Des modifications restent possibles, notamment en ce qui concerne la constitution des divers éléments ou par substitution d'équivalents techniques, sans pour autant sortir du domaine de protection défini dans les revendications.

## Revendications

1. Machine agricole destinée notamment à la fenaison, possédant un châssis (1) portant plusieurs rotors (2 à 5) destinés à déplacer des produits sur le sol, ledit châssis (1) étant réalisé en une partie centrale (6) et des parties latérales (7, 8), articulées aux extrémités de la partie centrale (6) par l'intermédiaire de pivots (9, 10) autour desquels elles sont déplaçables en hauteur au moyen de vérins hydrauliques (25, 26) pour le transport, ladite partie centrale (6) comportant une poutre de liaison (32) qui est articulée au moyen d'un axe sensiblement vertical (34) sur un chevalet d'attelage (33) à trois points d'accouplement (35, 36, 37), lequel chevalet d'attelage (33) est muni d'un dispositif d'arrêt (41) pour immobiliser automatiquement la poutre de liaison (32) et le châssis (1) par rapport au chevalet (33) lorsque toute la machine est soulevée, un verrou (44) étant en sus prévu pour bloquer le dispositif d'arrêt (41) dans la position où il immobilise la poutre de liaison (32) durant le transport, caractérisée par le fait qu'au verrou (44) sont reliés des moyens de manoeuvre (49) s'étendant jusqu'au voisinage d'une partie latérale (7 ou 8) du châssis (1) et qui sont agencés de manière à être actionnés automatiquement par cette partie latérale (7 ou 8) ou le vérin hydraulique correspondant (25 ou 26) lorsque ladite partie latérale est déplacée vers le haut dans la position de transport.

2. Machine agricole selon la revendication 1, caractérisée par le fait que les moyens de manoeuvre (49) comprennent un pivot (51) qui est articulé sur un axe (52) sensiblement vertical et qui est relié au verrou (44) au moyen d'une tringle (50).

3. Machine agricole selon la revendication 2, caractérisée par le fait que le pivot (51) comporte deux bras (53 et 54) dont l'un est relié à la tringle (50) et l'autre s'étend jusque dans la zone de déplacement de la partie latérale (7 ou 8) du châssis (1) ou du vérin hydraulique (25 ou 26) correspondant.

4. Machine agricole selon la revendication 3, caractérisée par le fait que le premier bras (53) du pivot (51) comporte un trou oblong (55) dans lequel est guidée l'extrémité arrière de la tringle (50).

5. Machine agricole selon la revendication 3, caractérisée par le fait que le second bras (54) du pivot (51) comporte une face inclinée (58).

6. Machine agricole selon l'une quelconque des revendications précédentes, caractérisée par le fait que le verrou (44) comporte un premier ressort (59) dont l'action tend à amener ledit verrou (44) dans la position où il bloque le dispositif d'arrêt (41).

7. Machine agricole selon l'une quelconque des revendications précédentes, caractérisée par le fait que le pivot (51) comporte un deuxième ressort (60) dont l'action tend à retirer le verrou (44) de la position où il bloque le dispositif d'arret (41).

8. Machine agricole selon la revendication 6 ou 7, caractérisée par le fait que la force du deuxième ressort (60) est supérieure à la force du premier ressort (59).

9. Machine agricole selon la revendication 1, caractérisée par le fait que les moyens de manoeuvre (49) comprennent un pivot (62) qui est articulé sur un axe (65) sensiblement vertical, une tringle (63) reliant le pivot (62) au verrou (44) et un poussoir (64) qui est articulé sur ledit pivot (62).

10. Machine agricole selon la revendication 9, caractérisée par le fait que le pivot (62) présente deux bras (66 et 67) disposés en forme d'équerre, le premier bras (66) étant relié à la tringle (63) et le second bras (67) étant relié au poussoir (64).

11. Machine agricole selon la revendication 10, caractérisée par le fait que le premier bras (66) comporte un trou oblong (68) dans lequel est guidée l'extrémité arrière de la tringle (63).

12. Machine agricole selon la revendication 9, caractérisée par le fait que le poussoir (64) est constitué par une tige qui est guidée en translation dans des supports fixes (71 et 72) et dont une extrémité se situe dans la zone de déplacement de la partie latérale (7 ou 8) du châssis ou du vérin hydraulique (25 ou 26) correspondant.

13. Machine agricole selon l'une quelconque des revendications 9 à 11, caractérisée par le fait que le verrou (44) comporte un premier ressort (74) dont l'action tend à amener ledit verrou dans la position où il bloque le dispositif d'arrêt (41).

14. Machine agricole selon l'une quelconque des revendications 9 à 13, caractérisée par le fait qu'un deuxième ressort (75) est prévu sur le poussoir (64), l'action de ce ressort (75) tendant à déplacer le poussoir (64) vers la partie latérale (7 ou 8) qui commande ce dernier et, à retirer le verrou (44), par l'intermédiaire du pivot (62) et de la tringle (63), de la position où il bloque le dispositif d'arrêt (41).

15. Machine agricole selon la revendication 13 ou 14, caractérisée par le fait que la force du deuxième ressort (75) est supérieure à la force du premier ressort (74).

## Patentansprüche

1. Landmaschine, insbesondere zur Heuwerbung, die einen Stützrahmen (1) aufweist, der mehrere Rechräder (2 bis 5) zur Versetzung von Schnittgut auf dem Boden trägt, welcher Stützrahmen (1) aus einem Mittelteil (6) und Seitenteilen (7,8) gebildet ist, die an den Enden des Mittelteils (6) mittels Schwenkzapfen (9,10) angelenkt sind, um welche die Seitenteile nach oben mittels Hydraulikzylinder (25,26) für den Transport versetzbar sind, wobei der Mittelteil (6) einen Verbindungsbalken (32) aufweist, der mittels einer im wesentlichen vertikalen Achse (34) an einem Anbaugestell (33) mit drei Kupplungspunkten (35,36,37) angelenkt ist, welches Anbaugestell (33) mit einer Verriegelungseinrichtung (41) versehen ist, um automatisch den Verbindungsbalken (32) und den Stützrahmen (1) in bezug auf das Anbaugestell (33) unbeweglich zu machen, wenn die ganze Maschine angehoben ist, wobei zudem noch ein Riegel (44) zur Blockierung der Verriegelungseinrichtung (41) in der Stellung, in der sie den Verbindungsbalken (32) während des Transports unbeweglich macht, vorgesehen ist, dadurch gekennzeichnet, daß mit dem Riegel (44) Betätigungsmittel (49) verbunden sind, die sich bis in die Nähe eines Seitenteils (7 oder 8) des Stützrahmens (1) erstrecken und die derart angeordnet sind, daß sie automatisch durch diesen Seitenteil (7 oder 8) oder den entsprechenden Hydraulikzylinder (25 oder 26) betätigt werden, während die Seitenteile in der Transportstellung nach oben versetzt werden.

2. Landmaschine nach Anspruch 1, dadurch gekennzeichnet, daß die Betätigungsmittel (49) einen Schwenkhebel (51) umfassen, der an einer im wesentlichen vertikalen Achse (52) angelenkt ist und der mit dem Riegel (44) mittels einer Stange (50) verbunden ist.

3. Landmaschine nach Anspruch 2, dadurch gekennzeichnet, daß der Schwenkhebel (51) zwei Arme (53 und 54) umfaßt, von welchen einer mit der Stange (50) verbunden ist und der andere sich bis in den Versetzungsbereich des Seitenteils (7 oder 8) des Stützrahmens (1) oder des entsprechenden Hydraulikzylinders (25 oder 26) erstreckt.

4. Landmaschine nach Anspruch 3, dadurch gekennzeichnet, daß der erste Arm (53) des Schwenkhebels (51) ein Langloch (55) aufweist, in dem das hintere Ende der Stange (50) geführt ist.

5. Landmaschine nach Anspruch 3, dadurch gekennzeichnet, daß der zweite Arm (54) des Schwenkhebels (51) eine geneigte Kante (58) aufweist.

6. Landmaschine nach einem der vorhergehenden Ansprüche, dadurch gekennzeichnet, daß der Riegel (44) eine erste Feder (59) aufweist, deren Wirkung dahingeht, den Riegel (44) in die Stellung zu führen, in der er die Verriegelungseinrichtung (41) blockiert.

7. Landmaschine nach einem der vorhergehenden Ansprüche, dadurch gekennzeichnet, daß der Schwenkhebel (51) eine zweite Feder (60) aufweist, deren Wirkung dahingeht, den Riegel (44) aus der Stellung zurückzuziehen, in der er die Verriegelungseinrichtung (41) blockiert.

8. Landmaschine nach Anspruch 6 oder 7, dadurch gekennzeichnet, daß die Kraft der zweiten Feder (60) größer ist als die Kraft der ersten Feder (59).

9. Landmaschine nach Anspruch 1, dadurch gekennzeichnet, daß die Betätigungsmittel (49) einen Schwenkhebel (62), der an einer im wesentlichen vertikalen Achse (65) angelenkt ist, wobei eine Stange (63) den Schwenkhebel (62) mit dem Riegel (44) verbindet, und einen Stößel 64), der am Schwenkhebel (62) angelenkt ist, umfassen.

10. Landmaschine nach Anspruch 9, dadurch gekennzeichnet, daß der Schwenkhebel (62) zwei Arme (66 und 67) aufweist, die winkelförmig angeordnet sind, wobei der erste Arm (66) mit der Stange (63) und der zweite Arm (67) mit dem Stößel (64) verbunden ist.

11. Landmaschine nach Anspruch 10, dadurch gekennzeichnet, daß der erste Arm (66) ein Langloch (68) aufweist, in dem das hintere Ende der Stange (63) geführt ist.

12. Landmaschine nach Anspruch 9, dadurch gekenn-zeichnet, daß der Stößel (64) aus einer Stange besteht, die verschiebbar in feststehenden Stützen (71 und 72) geführt ist und deren eines Ende sich im Versetzungsbereich des Seitenteiles (7 oder 8) des Stützrahmens oder des entsprechenden Hydraulikzylinders (25 oder 26) befindet.

13. Landmaschine nach einem der Ansprüche 9 bis 11, dadurch gekennzeichnet, daß der Riegel (44) eine erste Feder (74) aufweist, deren Wirkung dahingeht, den Riegel in die Stellung zu führen, in der er die Verriegelungs-einrichtung (41) blockiert.

14. Landmaschine nach einem der Ansprüche 9 bis 13, dadurch gekennzeichnet, daß eine zweite Feder (75) auf dem Stößel (64) vorgesehen ist, wobei die Wirkung der Feder (75) dahingeht, den Stößel (64) zum Seitenteil (7 oder 8) hin, der den Stößel steuert, zu versetzen und mittels des Schwenkhebels (62) und der Stange (63) den Riegel (44) aus der Stellung zurückzuziehen, in der er die Verriegelungseinrichtung (41) blockiert.

15. Landmaschine nach einem der ansprüche 13 oder 14, dadurch gekennzeichnet, daß die Kraft der zweiten Feder (75) größer ist als die Kraft der ersten Feder (74).

## Claims

1. Agricultural machine particularly for haymaking, having a frame (1) carrying several rotors (2 to 5) to displace products lying on the soil, said frame (1) being achieved in a central part (6) and lateral parts (7, 8) which are articulated at the ends of the central part (6) by means of pivots (9, 10) around which they are upwardly moveable by means of hydraulic jacks (25, 26) for the transport, said central part (6) comprising a connecting beam (32) which is articulated by means of an approximately upright axis (34) on a three point (35, 36, 37) coupling trestle (33), said coupling trestle (33) is provided with a stopping device (41) to automatically stop the connecting beam (32) and the frame (1) with regard to the trestle (33) when the whole machine is lifted, a catch (44) being additionally provided to lock the stopping device (41) in the position where it stops the connecting beam (32) during transport, characterized in that to the catch (44) are connected actuating means (49) extending to the vicinity of the lateral part (7 or 8) of the frame (1) and which are arranged so as to be automatically actuated by this lateral part (7 or 8) or the corresponding hydraulic jack (25 or 26) when the said lateral part is upwardly moved in the transport position.

2. Agricultural machine according to claim 1, characterized in that the actuating means (49) comprise a pivot (51) which is articulated on an approximately upright axis (52) and which is connected to the catch (44) by means of a rod (50).

3. Agricultural machine according to claim 2, characterized in that the pivot (51) comprises two arms (53 and 54), one of which is connected to the rod (50) and the other extending to the area in which the lateral part (7 or 8) of the frame (1) or the corresponding hydraulic jack (25 or 26) moves.

4. Agricultural machine according to claim 3, characterized in that the first arm (53) of the pivot (51) comprises an oblong opening (55) in which the rear end of the rod (50) is guided.

5. Agricultural machine according to claim 3, characterized in that the second arm (54) of the pivot (51) comprises an inclined face (58).

6. Agricultural machine according to anyone of the preceding claims, characterized in that the catch (44) comprises a first spring (59) whose action tends to bring the said catch (44) into the position where it locks the stopping device (41).

7. Agricultural machine according to anyone of the preceding claims, characterized in that the pivot (51) comprises a second spring (60) whose action tends to remove the catch (44) from the position where it locks the stopping device (41).

8. Agricultural machine according to claim 6 or 7, characterized in that the strength of the second spring (60) is greater than the strength of the first spring (59).

9. Agricultural machine according to claim 1, characterized in that the actuating means (49) comprise a pivot (62) which is articulated on an approximately upright axis (65), a rod (63) connecting the pivot (62) to the catch (44) and a push shaft (64) which is articulated on the said pivot (62).

10. Agricultural machine according to claim 9, characterized in that pivot (62) has two arms (66 and 67) which are arranged to form an angle, the first arm (66) being connected to the rod (63) and the second arm (67) being connected to the push shaft (64).

11. Agricultural machine according to claim 10, characterized in that the first arm (66) comprises an oblong opening (68) in which the rear end of the rod (63) is guided.

12. Agricultural machine according to claim 9, characterized in that the push shaft (64) is made up of a shaft which is guided in translation in fixed supports (71 and 72) and one end of which is located in the area where the lateral part (7 or 8) of the frame or the corresponding hydraulic jack (25 or 26) moves.

13. Agricultural machine according to anyone of claims 9 to 11, characterized in that the catch (44) comprises a first spring (74) whose action tends to bring the said bolt into the position where it locks the stopping device (41).

14. Agricultural machine according to anyone of claims 9 to 13, characterized in that the push shaft (64) is provided with a second spring (75), the action of said spring (75) tending to displace the push shaft (64) to the lateral part (7 or 8) which actuates this push shaft and remove, by means of the pivot (62) and the rod (63), the catch (44) from the position where it locks the stopping device (41).

15. Agricultural machine according to claim 13 or 14, characterized in that the strength of the second spring (75) is greater than the strength of the first spring (74).
